# EUROPEAN PATENT APPLICATION

(11) **EP 3 388 204 A1**
(43) Date of publication of application: **17.10.2018**
(21) Application number: 17166608.4
(22) Date of filing: 13.04.2017
(51) Int. Cl.: B25J 5/02, B61B 3/02, B61B 13/06

(54) **ROBOTIC INSPECTION DEVICE AND SYSTEM**

(71) Applicant: Petróleo Brasileiro S.A. Petrobras, Rio de Janeiro, RJ (BR)
(72) Inventor: Romankevicius Costa, Ramon, 21941-972 Rio de Janeiro (BR); Johan From, Pal, 22071-020 Rio de Janeiro (BR); Medeiros Freitas, Gustavo, 35400-000 Ouro Preto (BR); Pires Sales de Carvalho, Guilherme, 21931-170 Rio de Janeiro (BR); Galassi, Mauricio, 21941-915 Rio de Janeiro (BR); Royroy, Anders, 5034 Bergen (NO); Derks, Peter Wilhelmus Jacques, 22210-010 Rio de Janeiro (BR)
(74) Representative: J A Kemp

(57) **Abstract**

The present invention relates to a robotic inspection device (10) comprising at least two robotic modules (1) connected to each other by means of an articulated joint (9), wherein each of the robotic modules (1) comprise at least one displacement means (2) configured to couple to a rail (11), the displacement means (2) comprising a pivoting displacement device (3).

## Description

. The present invention relates to a robotic inspection device and a robotic inspection system.

. More specifically, the present invention relates to a robotic inspection device and system used to inspect, monitor and perform maintenance in confined or difficult-to-access areas.

. Oil platforms periodically require inspection and maintenance, which is mainly performed by operators on board.

. However, some sites that are to be inspected or at which maintenance is to be performed are difficult to access and/or are hazardous to the operator, as such sites may pose risks of explosions and fire, and toxic gases may be present.

. Additionally, equipment to be inspected may be far from the ground. Maintenance and inspection may thus require the installation of scaffolding, thereby increasing maintenance time and the risk of accidents.

. Korean document KR 100486029 B1 (Application number KR 200365521) describes a method for controlling a mobile robot used to perform repairs in a confined space. The robot is controlled by means of modulated signals, which are transmitted by superimposing the modulated signals onto the power supply of the robot. When a signal is sent, the robot separates it from the power supply, decodes it and displays it on a display or performs the command sent.

. However, this method has the drawback that it cannot be used in places where the equipment to be monitored and serviced is a certain distance from the ground. Instead, the method uses the device in areas where the device moves on level or slightly sloped ground.

. Brazilian document BR PI0406006-7 describes a robotic device used in enclosed surrounding environments. The robotic device moves within the inner portion of the environment. The robotic device comprises a data acquisition system for monitoring the activity to be developed, and a system for transmitting data in order to remotely send commands to the device. The robotic device has sealing, location and operation control systems as accessories. The document also describes that this device was developed for internal repair of pipelines.

. However, this robotic device has the drawback that it can only be used in the inner portion of pipelines, preventing monitoring and inspection of other types of external equipment.

. Therefore, the state of the art does not include a robotic inspection device that reduces the time of inspection and/or maintenance of an object. The state of the art does also not include a robotic inspection device that facilitates the inspection and/or maintenance of an object located in a place that is difficult to access, or an object located in a confined space, and that reduces the risk to health and, consequently, increases operator safety.

. Therefore, an objective of the present invention is to provide a robotic inspection device and system that reduces the time of inspection and/or maintenance of an object.

. Another objective of the present invention is to provide a robotic inspection device and system that facilitates the inspection and/or maintenance of an object located in a place that is difficult to access or in a confined space.

. Another objective of the present invention is to provide a robotic inspection device and system that reduces the risk to health, increasing operator safety.

. The present invention at least partly meets the above and other objectives by means of a robotic inspection device and system that has the advantage of increasing productivity and efficiency of the inspection process and maintenance of equipment. The present invention further reduces downtime of equipment in confined spaces or places that are difficult to access, and reduces risks to an operator's health.

. According to the present invention there is provided the robotic inspection device of claim 1 and the robotic inspection system of claim 11. Further aspects of the invention are set out in the dependent claims. The robotic inspection device comprises at least two robotic modules. The at least two robotic modules are connected together by means of an articulated joint. The robotic inspection device has at least one displacement means coupled to a rail. The displacement means comprises at least one pivoting displacement device. The robotic inspection system comprises the robotic inspection device and a rail, wherein the displacement means is coupled to the rail.

. Also disclosed is a robotic inspection device, characterized in that it comprises at least one pair of robotic modules connected together by means of an articulated joint. The robotic module has at least one displacement device coupled to a rail. The displacement device comprises a pivoting displacement device. At least one of the robotic modules comprises at least one within an instrumentation system and a manipulator arm.

. Optionally, the robotic inspection device is characterized in that the displacement device comprises two pivoting displacement devices.

. Further optionally, the robotic inspection device is characterized in that each pivoting displacement device comprises a first pivotable bracket coupled to the upper portion of the robotic module and a second pivotable bracket coupled to the first pivotable bracket, the coupling being orthogonal to the coupling of the first pivotable bracket at the upper portion of the robotic inspection device.

. Further optionally, the robotic inspection device is characterized in that the second pivotable bracket of at least one of the pivoting displacement devices has at least two wheels positioned diametrically opposed. The wheels are coupled to an electric motor. The wheels are supported on the rail and configured to move the robotic module.

. Further optionally, the robotic inspection device is characterized in that the coupling between the wheels and the electric motor is carried out by means of a gear system.

. Further optionally, the robotic inspection device is characterized in that the gear system comprises a planetary gear coupled to the electric motor, a first spur gear coupled to a planetary gear and connected to a second spur gear, a third spur gear connected to a second spur gear and coupled to a first bevel gear and a second bevel gear connected to the first bevel gear and coupled to the wheel.

. Further optionally, the robotic inspection device is characterized in that one of the robotic modules has an instrumentation system and other robotic modules have a manipulator arm.

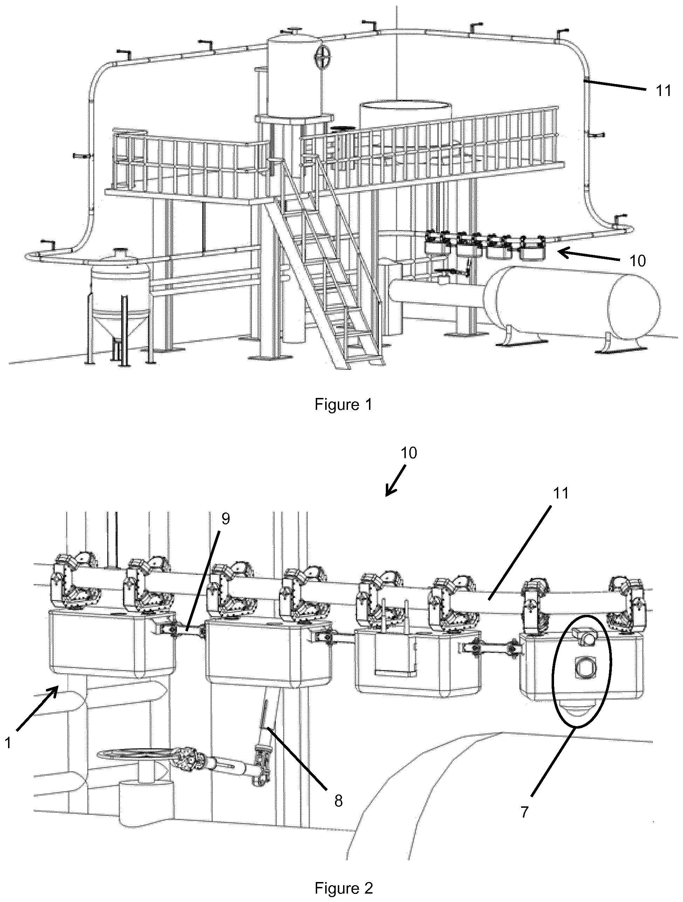

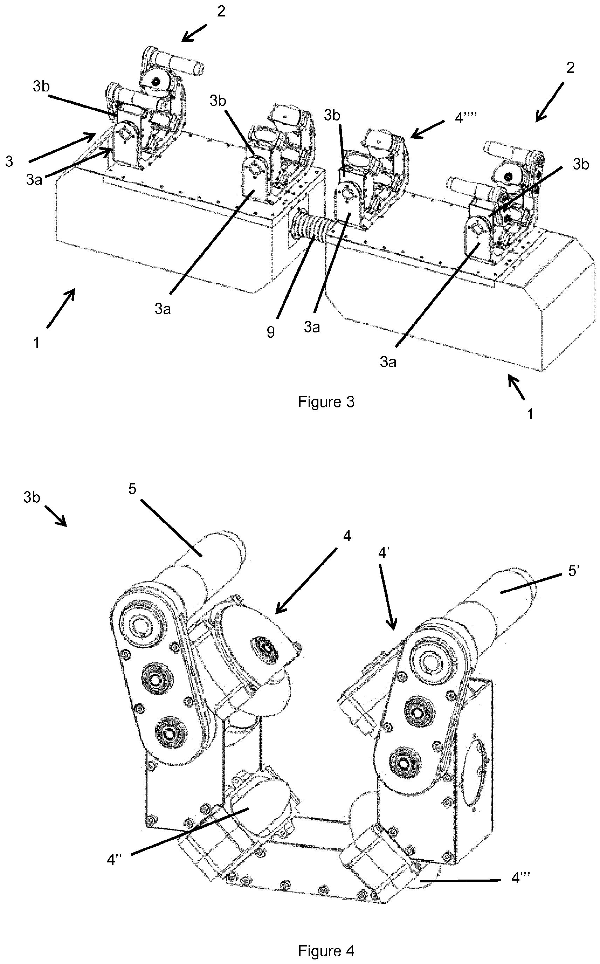

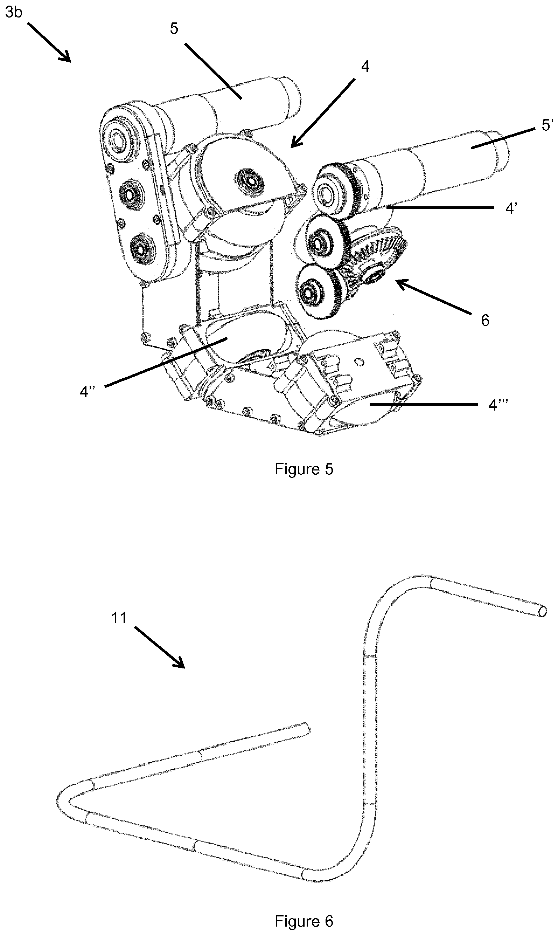

. The present invention will be described below in more detail, with reference to the appended drawings, in which:
. **Figure 1** is a perspective view of the robotic inspection system according to a preferred embodiment of the present invention, the system being shown schematically installed in an operating space.
. **Figure 2** is a detailed view of the robotic inspection device according to a preferred embodiment of the present invention, the device being shown installed on a drive rail.
. **Figure 3** is a perspective view of the robotic module according to a preferred embodiment of the present invention.
. **Figure 4** is a perspective view of a pivotable bracket according to a preferred embodiment of the present invention.
. **Figure 5** is a perspective view of a pivotable bracket according to a preferred embodiment of the present invention.
. **Figure 6** is a perspective view of a rail according to a preferred embodiment of the present invention.

. Figure 1 illustrates a preferred embodiment of the robotic inspection device 10 and the robotic inspection system of the present invention.

. For a better understanding of the invention, the robotic inspection device 10 and the robotic inspection system are used on an oil platform in the following detailed description. However, the robotic inspection device and the robotic inspection system can be used anywhere that requires inspection of equipment located in confined or difficult-to-access places.

. As shown in Figures 1 and 2, the robotic inspection device 10 comprises at least two robotic modules 1 coupled together by means of an articulated joint 9. The robotic inspection system comprises the robotic inspection device 10 and a rail 11.

. The rail 11 may comprise a series of straight and curved tubular elements. The tubular elements are connected to each other. The tubular elements (and as such, the rail 11) form a path along which the robotic modules 1 may move, as shown in Figures 1 and 6. The rail 11 may have a circular cross section. Alternatively, the rail 11 may have a rectangular, square, or polygonal cross section, or the cross section may be of a different shape. The rail 11, and as such the path formed by the rail 11, may be curved. The rail 11 may be curved in a horizontal and/or in a vertical plane. The rail 11 may be suspended from a ceiling, a wall, pillars, or a combination thereof. The rail 11 may be at different levels or heights from the ground at two points along the path formed by the rail 11. The rail 11 may be not directly supported on the ground. The robotic modules 1 may be suspended from the rail 11.

. The rail 11 may be installed in areas of interest, in which the equipment to be inspected or serviced is located. Thus, preferably, the rail 11 is installed on a path close to the areas and equipment that require constant maintenance. The rail 11 may be installed such that equipment to be inspected or serviced is within an operating distance of a robotic module 1 coupled to the rail 11.

. The articulated joint 9 may prevent the robotic modules 1 from rotating around (or with respect to) the rail 11. The articulated joint 9 may be provided with a series of discs attached to steel cables with springs at their ends.

. The steel cables and springs may provide flexibility when the robotic module 1 moves along a curved path formed by rail 11. The discs may provide rigidity to the assembly, limiting deformation of the articulated joint 9.

. As shown in Figures 3, 4 and 5, the robotic modules 1 are connected together by means of an articulated joint 9. The robotic modules have at least one means for displacement 2, or displacement means 2.

. The displacement means 2 comprises at least one pivoting displacement device 3. The pivoting displacement device 3 couples a respective robotic module 1 to the rail 11. The pivoting displacement device 3 may be used to move the robotic module 1 along the rail 11. In a preferred embodiment of the invention shown in Figure 1, the displacement means 2 of each robotic module 1 comprises two pivoting displacement devices 3. However, other embodiments may use only one pivoting device.

. Preferably, a pivoting displacement device 3 comprises a first pivotable bracket 3a. The first pivotable bracket 3a may be coupled, or pivotably coupled, to the upper portion of the robotic module 1. A second pivotable bracket 3b may be coupled, or pivotably coupled, to the first pivotable bracket 3a.

. The coupling between the first and second pivotable brackets 3a, 3b may be orthogonal to the coupling between the first pivotable bracket 3a and the upper portion of the robotic inspection device 10. The robotic module 1 may thus move (or pivot, or rotate) about a vertical and a horizontal axis.

. Figure 4 is an enlarged view of a preferred embodiment of the second pivotable bracket 3b. As shown in this figure, the second pivotable bracket 3b may comprise at least two wheels 4, 4'. The two wheels 4, 4' are located on opposing sides of the upper portion of the second pivotable bracket 3b. As such, the two wheels 4, 4' may be located on different sides of the rail 11 when the robotic module 1 is coupled to the rail 11. The two wheels 4, 4' may be positioned diametrically opposed in the robotic module's upper portion.

. Preferably, the second pivotable bracket 3b comprises four wheels 4, 4', 4", 4"'. Two wheels 4, 4' may be located on opposing sides of the upper portion of the second pivotable bracket 3b, and/or may be located diametrically opposed in the second pivotable bracket's upper portion. The other two wheels 4", 4'" may be located on opposing sides of the bottom portion of the second pivotable bracket 3b, and/or may be located diametrically opposed in the second pivotable bracket's bottom portion, as shown in Figure 4. The four wheels 4, 4', 4", 4'" may engage the pipe in a single plane that is perpendicular to the axis of the rail 11, the axis of the rail 11 pointing in the direction along the rail 11. The four wheels 4, 4', 4", 4"' may encircle, or substantially encircle, the rail 11, so as to contact the rail 11 at four circumferential locations. Respective two of the four circumferential locations may be diametrically opposed.

. This preferred embodiment of the second pivotable bracket 3b advantageously may prevent rotation of the robotic module 1 about the axis of the rail 11. This is because of friction between the wheels 4, 4', 4", 4"' and the external portion (or surface) of the rail 11. In addition, the wheels 4, 4', 4", 4'" may be tightly coupled to the surface of the rail 11. This may prevent gaps between the wheels 4, 4', 4", 4'" and the rail 11, such that the wheels 4, 4', 4", 4'" directly engage the rail 11.

. As shown in Figures 3 and 5, in a preferred embodiment of the present invention, at least one of the pivoting displacement devices 3 comprises a motor for driving the robotic module 1. Thus, in the motorized pivoting displacement device 3, the upper wheels 4, 4' of the second pivotable bracket 3b may each be coupled to an electric motor 5, 5' by means of a gear system 6 (see Figure 5). The lower wheels 4", 4"' may be unmotorized. Alternatively, only one of the wheels 4, 4', 4", 4"' may be coupled to a motor 5, or more than one wheel 4, 4', 4", 4'" may be coupled to a single motor 5.

. In the preferred embodiment, the displacement means 2 of each robotic module 1 may comprise a motorized pivoting displacement device 3, in which the second pivotable bracket 3b, or at least one of the wheels 4, 4', 4", 4"', is connected to a motor 5, and a displacement device 3 without a motor 5 (see Figure 3). Alternatively, only one of the robotic modules 1 may comprise a motorized pivoting displacement device 3.

. The gear system 6 may comprise a planetary gear coupled to the electric motor 5, 5'. A first spur gear may be coupled to the planetary gear. The first spur gear may be connected to a second spur gear. A third spur gear may be connected to the second spur gear. The third spur gear may be coupled to a first bevel gear. A second bevel gear may be connected to the first bevel gear and coupled to the wheel 4, 4'.

. The electric motors 5, 5' may be triggered by motor drivers with dedicated power. The motor drivers may control the position, speed and torque of each motor individually.

. The first and second pivotable brackets 31 a, 31 b are preferably gimbals. Each of the first and second pivotable brackets 31 a, 31 b may enable rotation about a single axis. However, other types of brackets can be used, provided that the objectives are met.

. In a preferred embodiment, each robotic module 1 comprises a system or feature for performing inspections and/or maintenance. Alternatively, some robotic modules may be used for other purposes, such as power supply, communication, or to move the robotic modules along the rail.

. Thus, as best shown in Figure 2, a robotic module 1 may comprise an instrumentation system 7 and another robotic module 1 may comprise a mechanical arm 8. Alternatively, one robotic module may comprise both an instrumentation system 7 and a mechanical arm 8.

. The mechanical arm 8 may inspect and collect samples of inspected objects. The mechanical arm 8 may be used for service and maintenance.

. The instrumentation system 7 may acquire data from the environment to be inspected by means of sensors. The number and type of sensors to be used vary according to the type of equipment and/or location to be inspected.

. The sensors may, for example, be a fixed, pan-tilt-zoom (PTZ), thermal, panoramic or stereoscopic camera, a probe to detect hydrocarbons and combustible gases, a sensor for acoustic noise or a vibration sensor.

. The data collected by the sensors may be analyzed by a signalprocessing algorithm system, capable of detecting irregularities in the inspected environment.

. The irregularities that can be detected are, for example, intrusion, abandoned objects, smoke, fire, gas or liquid leakage and malfunction of machinery.

. Furthermore, one or more of the electric motors 5, 5', the instrumentation system 7 and the mechanical arm 8 may be manipulated by a control system.

. The robotic inspection device 10 may require a power supply, such that all of the components of the robotic inspection device 10 can be used. To this end, the robotic inspection device 10 may use a power system.

. Such a power system may use batteries that are allocated within a robotic module 1 or by conventional means, such as a remote power source connected to the robotic modules by cables.

. Additionally, the robotic inspection device 10 may have a communications system. The communication system may comprise wireless equipment and/or cables. Data may be exchanged among different robotic modules 1 and/or between the robotic modules 1 and a command base.

. Thus, there is provided a robotic inspection device 10 and a robotic inspection system that reduce the time of inspection and maintenance of an object.

. There is also provided a robotic inspection device 10 and a robotic inspection system that facilitate inspection and maintenance of an object located in a place that is difficult to access or in a confined space, and that reduce the risk to an operator's health, as the operator does not need to access harsh environments.

. Having described an example of a preferred embodiment of the present invention, it should be understood that the scope of the present invention encompasses other possible variations of the invention described, being limited solely by the wording of the appended claims, including therein possible equivalents.

## Claims

1. A robotic inspection device (10) comprising:
at least two robotic modules (1) connected to each other by means of an articulated joint (9);
wherein each of the robotic modules (1) comprises at least one displacement means (2) configured to couple to a rail (11), the displacement means (2) comprising a pivoting displacement device (3).

2. Robotic inspection device (10) according to claim 1,
wherein at least one of the robotic modules (1) comprises at least one of an instrumentation system (7) and a manipulator arm (8).

3. Robotic inspection device (10) according to claim 1 or 2, wherein the displacement means (2) comprises two pivoting displacement devices (3).

4. Robotic inspection device (10) according to any one of claims 1 to 3, wherein each pivoting displacement device (3) comprises a first pivotable bracket (3a) coupled to the upper portion of a respective robotic module (1) and a second pivotable bracket (3b) coupled to the first pivotable bracket (3a), the coupling between the first and second pivotable brackets (3a, 3b) being orthogonal to the coupling between the first pivotable bracket (3a) and the upper portion of the robotic inspection device (10).

5. Robotic inspection device (10) according to any one of claims 1 to 4, wherein at least one pivoting displacement device (3) comprises a wheel (4) and a motor (5), wherein the wheel (4) is coupled to the motor (5), and wherein the wheel (4) is configured to engage a rail (11).

6. Robotic inspection device (10) according to claims 4 or 5, wherein the second pivotable bracket (3b) of at least one of the pivoting displacement devices (3) comprises at least two wheels (4, 4'),
wherein the wheels (4, 4') are positioned on opposing sides of the second pivotable bracket (3b),
wherein each of the wheels (4, 4') is coupled to an electric motor (5, 5'),
and wherein the wheels (4, 4') are configured to engage the rail (11) and to move the at least two robotic modules (1).

7. Robotic inspection device (10) according to claims 5 or 6, wherein the wheels (4, 4') are coupled to the electric motor (5, 5') by means of a gear system (6).

8. Robotic inspection device (10) according to any of claims 4 to 7, wherein the second pivotable bracket (3b) of at least one of the pivoting displacement devices (3) comprises four wheels (4, 4', 4", 4"'), wherein the four wheels (4, 4', 4", 4"') are configured to engage a pipe (11) at four locations, respective two of the four locations being diametrically opposed with respect to the pipe (11).

9. Robotic inspection device (10) according to claim 7 or 8, wherein the gear system (6) comprises:
a planetary gear coupled to the electric motor (5, 5'),
a first spur gear coupled to the planetary gear and connected to a second spur gear,
a third spur gear connected to the second spur gear and coupled to a first bevel gear, and
a second bevel gear connected to the first bevel gear and coupled to the wheel (4, 4').

10. Robotic inspection device (10) according to any one of claims 1 to 9, wherein one of the at least two robotic modules (1) comprises an instrumentation system (7) and another of the at least two robotic modules (1) comprises a manipulator arm (8).

11. Robotic inspection system, comprising the robotic inspection device (10) of any of claims 1 to 10 and a rail (11), wherein the displacement means (2) is coupled to the rail (11).

12. Robotic inspection system according to claim 11, wherein the at least two robotic modules (1) are suspended from the rail (11).

13. Robotic inspection system according to claims 11 or 12, wherein the rail (11) is at different heights from the ground at two different positions along the rail (11).
